# EUROPÄISCHE PATENTANMELDUNG

(11) **EP 1 709 859 A1**
(43) Veröffentlichungstag der Anmeldung: **11.10.2006**
(21) Anmeldenummer: 06112084.6
(22) Anmeldetag: 31.03.2006
(51) Int. Cl.: A01D 41/14

(54) **Verfahren und Vorrichtung zur Höhensteuerung**

(30) Priorität: 05.04.2005 DE 102005015615
(71) Anmelder: MULAG Fahrzeugwerk Heinz Wössner GmbH & Co. KG, 77728 Oppenau (DE)
(72) Erfinder: Müller, Alfred, 77728 Oppenau (DE)
(74) Vertreter: Vogeser, Werner

(57) **Zusammenfassung**

Die Erfindung betrifft eine Steuerung, insbesondere eine Höhensteuerung, für einen über dem Untergrund (20) geführten Arbeitskopf (2), der mittels kontaktloser arbeitender Sensoren (S1,S2,...) eine Geländevorabtastung schafft, die in der Praxis auch bei schneller Fahrt in Arbeitsrichtung (10) einsetzbar ist. Dabei wird mittels wenigstens einen berührungslos arbeitendem Sensor der Untergrund (20) in Arbeitsrichtung (10) vor und/oder seitlich von dem momentanen Wirkbereich des Arbeitskopfes (2), insbesondere Mähkopfes, abgetastet, und die von dem berührungslosen Sensor ermittelten Signale der Steuerung (8) zugeführt werden, und diese die Lage, insbesondere Höhenlage und/oder Kipplage um eine horizontale, in Arbeitsrichtung liegende Kippachse (23), verändert.

## Beschreibung

### I. Anwendungsgebiet

Die Erfindung betrifft eine Steuerung, insbesondere eine Höhensteuerung, für einen über dem Untergrund geführten Arbeitskopf.

### II. Technischer Hintergrund

In vielen Anwendungsfällen wird der Untergrund bearbeitet, beispielsweise der Boden gekehrt oder der Bewuchs des Bodens gemäht, mittels eines Arbeitskopfes, der - z. B. an einem Arbeitsfahrzeug befestigt - über dem Untergrund geführt wird.

Wenn es sich dabei nicht um vollständig künstlich eingeebneten Untergrund handelt, ist hierfür eine Erkennung der Kontur des zu bearbeitenden Untergrunds und/oder dessen Bewuchses in Arbeitsrichtung vor dem Arbeitskopf notwendig und eine entsprechende Steuerung des Arbeitskopfes hinsichtlich Höhenlage, Seitenkippung, Schrägstellung in der Aufsicht und/oder Drehzahl, Drehmoment und Arbeitsgeschwindigkeit in Arbeitsrichtung notwendig.

Je ungleichmäßiger der Untergrund und/oder der zu beachtende Bewuchs des Untergrundes hinsichtlich Höhe und Struktur ist, umso eher erfolgt dies nach wie vor von Hand.

Ein typischer Fall für eine derartige Anwendung ist der am vorderen Ende eines Auslegerarmes von einem Arbeitsfahrzeug geführte Mähkopf eines Auslegermähgerätes, insbesondere eines Randstreifen-Mähgerätes, mit dessen Hilfe neben dem Straßenrand der Bewuchs der Grünflächen gemäht wird, weshalb im Folgenden an Stelle des Begriffes "Arbeitskopf" die konkrete Bezeichnung "Mähkopf verwendet wird, ohne die Erfindung auf diesen Anwendungsfall zu beschränken.

Bei einem derartigen Mähkopf erfolgt im Stand der Technik die Abtastung des Untergrundes dadurch, dass am Gehäuse des Mähkopfes, in Arbeitsrichtung allerdings hinter dem Mähwerk, eine Abtastwalze befestigt ist, die auf dem Untergrund aufliegt. Auf Grund einer federnden Aufhängung der Abtastwalze am Gehäuse und/oder eines damit verbundenen Kraftsensors oder Drucksensors wird sichergestellt, dass die Abtastwalze und damit der Mähkopf nicht zu stark gegen den Boden gepresst wird und in diesem Sinne über die meist mittels Hydraulikzylinder relativ zueinander verstellten und in Position gehaltenen Teile des Auslegerarmes der Mähkopf mit einer vorgegebenen Kraft bzw. Druck auf dem Untergrund aufliegt.

Kippstellungen des Mähkopfes zur Seite um eine in Längsrichtung verlaufende horizontale Kippachse, Schrägstellungen des Mähkopfes in der Aufsicht betrachtet, also schräg zur Arbeitsrichtung, müssen ebenso manuell vom Bediener vorgegeben werden wie ein Anheben des Mähkopfes vor relativ steil aufragenden Erhebungen, wenn das Ansteigen der Erhebung so steil ist, dass die hinter dem Mähwerk angeordnete Abtastwalze ein Hineinfräsen der Messer des Mähwerkes in die ansteigende Flanke der Erhebung nicht verhindern könnten.

Eine solche über die Breite des Mähkopfes sich erstreckende Abtastwalze kann speziell bei einem Mähwerk nicht vor dem Mähwerk angeordnet werden, da dies zum Niederdrücken des zu mähenden Grases führen würde. Die Anordnung hinter dem Mähwerk kann jedoch das Eingraben in eine steil ansteigende Erhebung nicht zuverlässig verhindern.

Punktuell bzw. in Fahrtrichtung linienförmig vor dem Mähwerk anzuordnende kontaktierende Abtastelemente wie Gleitkufen, Tasträder etc., die das Mähgut nicht auf der gesamten Breite niederdrücken, haben sich in der Praxis nicht bewährt, da sie auf Grund der hohen Fahrgeschwindigkeit solcher Mähköpfe von ca. 5 km/h häufig nach hinten umgebogen und abgerissen werden, sobald sie an einem steil aufragenden Hindernis hängen bleiben.

Weiterhin wurde in der Vergangenheit bereits vorgeschlagen, eine Höhenabtastung mittels berührungslos arbeitender Sensoren durchzuführen, jedoch fehlt es bisher an in der Praxis anwendbaren Gesamtkonzepten und Detaillösungen einer solchen kontaktlosen Bodenabtastung.

### III. Darstellung der Erfindung

### a) Technische Aufgabe

Es ist daher die Aufgabe gemäß der Erfindung, eine mittels kontaktloser arbeitender Sensoren arbeitende Geländevorabtastung zu schaffen, die in der Praxis auch bei schneller Fahrt in Arbeitsrichtung einsetzbar ist.

### b) Lösung der Aufgabe

Diese Aufgabe wird durch die kennzeichnenden Merkmale der Ansprüche 1 und 10 gelöst. Vorteilhafte Ausführungsformen ergeben sich aus den Unteransprüchen.

Durch die Anordnung wenigstens eines berührungslos arbeitenden Sensors so, dass der Untergrund in Arbeitsrichtung vor dem momentanen Wirkbereich des Arbeitskopfes abgetastet wird, können Änderungen in der Geländeform, im Bewuchs oder auftauchende Hindernisse bereits vor Eintreffen im Wirkbereich detektiert werden und kommt mittels der Steuerung des Arbeitskopfes darauf reagiert werden, ohne dass vor dem Arbeitskopf eine z. B. den Bewuchs niederdrückende mechanische Abtastung in irgendeiner Art und Weise erforderlich wird.

Auch der mechanische Verschleiß insgesamt durch verschleißende Abtastwalzen, deren Lagerung und Federung etc., wird vermindert.

Durch Auswertung der Signale des berührungslos arbeitenden Sensors kann die Höhenlage des Arbeitskopfes und/oder auch die Kipplage um eine in Arbeitsrichtung verlaufende Kippachse des Arbeitskopfes von der Steuerung gesteuert werden, und bei dieser Steuerung kann auch die momentane Geschwindigkeit des Arbeitskopfes in Arbeitsrichtung mitberücksichtigt werden, die ja für den Zeitversatz zwischen Detektieren der entsprechenden Untergrundveränderung bzw. des Hindernisses und dem Eintreffen im Wirkbereich des Arbeitskopfes von großer Bedeutung ist.

Zu diesem Zweck wird der Steuerung wenigstens ein Signal, welches die Fahrtgeschwindigkeit des Arbeitsfahrzeuges wiedergibt, zugeführt, gegebenenfalls auch ein Signal, welches die momentane Relativbewegung des Arbeitskopfes relativ zum Arbeitsfahrzeug repräsentiert oder ein Signal betreffend die Geschwindigkeit des Arbeitskopfes über Grund.

Durch die Vorgabe einer Soll-Arbeitshöhe über dem Untergrund wird einerseits die Ist-Höhe geregelt und andererseits auch die Ist-Kipplage des Kopfes, sofern die Ist-Schräglage des Untergrunds durch die Sensoren ermittelt werden kann.

Durch das Abtasten des Untergrundes - worunter nicht nur der feste Untergrund, sondern auch dessen Bewuchs und auf dem Untergrund liegende Hindernisse gemeint sind - ist die größtmögliche Reichweite der Sensoren und damit der Abtastung in Arbeitsrichtung möglich und die geringstmögliche Behinderung der Sensoren durch das Arbeitsgerät selbst.

Eine Abtastung erfolgt dabei vorzugsweise auch vom Arbeitskopf aus vertikal nach unten, insbesondere mittels punktförmig, also nur eine kleine Fläche, abtastender, Sensoren, die beispielsweise an den äußeren Rändern des Mähkopfes, ergänzend auch in dessen mittlerem Bereich, angeordnet werden können. Durch diese Abtastung der Höhe über dem Boden ist an den entsprechenden Abtastpunkten einerseits die absolute Höhe bekannt, andererseits auch die Kipplage des Arbeitskopfes relativ zum Untergrund, sodass hieraus sowohl die Höhenlage als auch die Kipplage gesteuert werden kann.

Wenn zusätzlich auch eine Abtastung dieser Art im mittleren Bereich erfolgt, werden zwischen den seitlichen Rändern vorhandene Unebenheiten des Untergrunds miterfasst, was besonders dann notwendig ist, wenn keine zusätzliche Abtastung des Untergrundes weiter vorne, also im Bereich vor der vertikal nach unten gerichteten Abtastung, erfolgt. Eine solche Abtastung insbesondere vertikal nach unten in der Mitte zwischen dem linken und rechten Ende des Arbeitskopfes kann statt durch einzelne punktförmig abtastende Sensoren auch durch mindestens einen linienförmigen Sensor, der in Querrichtung z. B. an der Vorderkante des Mähkopfes verlaufend angeordnet ist, erfolgen.

Vorzugsweise erfolgt jedoch eine Abtastung des Untergrundes bereits in Arbeitsrichtung vor der Vorderkante des Arbeitskopfes, z. B. mittels auf der Oberseite des Arbeitskopfgehäuses befestigter und schräg nach vorne unten gerichteter Sensoren.

Dabei soll einerseits eine Höhenabtastung und Konturabtastung des festen Untergrundes, aber auch eine Abtastung des Bewuchses hinsichtlich Höhe und Struktur sowie eine Detektion fester, auf dem Untergrund aufliegender, Hindernisse durchgeführt werden.

Je nach angewandtem Sensorprinzip kann dies mit ein und denselben Sensoren oder mit unterschiedlichen Sensoren erfolgen. Die Abtastung des Bewuchses hinsichtlich Höhe und Struktur wird vorzugsweise mittels eines Liniensensors mit quer zur Arbeitsrichtung verlaufender Abtastlinie oder mittels eines Flächensensors erfolgen. Die Abtastfläche eines oder mehrerer solcher zusammenwirkender Flächensensoren deckt dabei möglichst genau die Arbeitsbreite des Arbeitskopfes ab, geht jedoch seitlich über diesen so wenig wie möglich hinaus.

Dabei werden Sensoren verwendet, deren Signale geeignet sind, auch die Struktur des Bewuchses zu erfassen, also insbesondere Dicke und/oder Masse der Bewuchselemente zu unterscheiden.

Die Bewuchsabtastung wird dabei bevorzugt von einem Punkt oberhalb des Befestigungspunktes der vertikalen Höhenabtastung aus erfolgen, jedoch vorzugsweise noch von dem Gehäuse des Mähkopfes aus, insbesondere mittels auf dessen Oberseite befestigter Sensoren.

Zusätzlich kann an wenigstens einer Seite des Mähkopfes ein Sensor zur Führungslinien-Abtastung vorhanden sein, der als Führungslinie für die Seitenführung des Mähkopfes die Kante zwischen dem zuvor gemähten Streifen und dem ungemähten Bereich abtastet oder den Straßenrand.

Zusätzlich kann trotz der berührungslosen Abtastung an der Vorderseite des Mähkopfes in Fahrtrichtung hinter dem Mähwerk am Gehäuse ein manuelles Abtastmittel, beispielsweise die bekannten, in Querrichtung durchgehenden, Abtastwalzen, vorhanden sein, welche auf dem Untergrund abrollen und mit dem Gehäuse über einen Kraftsensor oder einen Drucksensor verbunden sind.

Diese hinter dem Mähwerk erfolgende manuelle Abtastung kann entweder der Verifizierung der Ergebnisse der kontaktlosen Abtastung vor dem Arbeitskopf dienen, oder auch die Ist-Signale für die Absolutmessung der Höhe über dem Untergrund sowie der Kipplage relativ zum Untergrund liefern, während die berührungslos arbeitenden Sensoren die relativen Veränderungen hierzu im Vorfeld erkennen sollen.

Die Konturabtastung des Untergrundes mittels der berührungslos arbeitenden Sensoren als auch das Erkennen von festen, auf dem Untergrund liegenden oder stehenden Hindernissen, erfolgt vorzugsweise mittels anderer Sensorprinzipien und/oder mittels anderer Signalauswertungen und Sensorleistungen der gleichen Sensorprinzipien, um die Umrisse fester Gegenstände wie Hindernisse oder der Bodenkontur von denen des Bewuchses unterscheiden zu können. Als Sensor-Wirkprinzipien kommen Ultraschall, Mikrowellen, Laser, Infrarot und Radar in Betracht, wobei die Abtastung mittels Radar im Bereich von 24 GHz erfolgt, und die Abtastung mittels Radar die größte Wirkweite in Arbeitsrichtung nach vorne aufweist. Punktuell arbeitende Sensoren, insbesondere vertikal nach unten gerichtet und zur Abtastung des Untergrundes, werden vorzugsweise mittels Laserlicht betrieben.

Linienförmig oder flächig arbeitende Sensoren können vorzugsweise mittels Ultraschall oder als Laserscanner betrieben werden.

Als Lasersensoren kommen dabei auch zweidimensional arbeitende Laser sowie dreidimensional arbeitende Laser neben punktförmig arbeitenden Lasern in Frage.

Zusätzlich kann bei allen Sensorarten die Strahlungsleistung auch während des Betriebs verändert werden, vorzugsweise in Abhängigkeit des zuvor ermittelten Abstandes des Arbeitskopfes gegenüber dem Untergrund und/oder in Abhängigkeit des momentanen Schrägstellungswinkels nach vorne unten des jeweiligen Sensors.

Als eine Möglichkeit der berührungslos arbeitenden Sensoren kommt auch die Bildverarbeitung mittels eines CCD-Sensors in Frage, jedoch ist der Sensor dann vorzugsweise nicht am Gehäuse des Arbeitskopfes befestigt, sondern deutlich weiter oben, beispielsweise in mindestens 1 m Höhe, besser 2 m Höhe, an dem den Arbeitskopf tragenden Auslegerarm oder dem Arbeitsfahrzeug, um das bei allen optischen Sensoren vorhandene Problem der auftretenden Verschmutzung zu beheben.

Vor allem diejenigen Sensoren, die zur Erfassung von Hindernissen eingesetzt werden, sollten so beschaffen sein, dass sie in der Lage sind, auch zumindest die Breite des Hindernisses in Blickrichtung des Sensors zu ermitteln, vorzugsweise auch die absolute Höhe des Hindernisses oder wenigstens die Relation der Höhe zur Grundfläche des Hindernisses oder zur Höhe der Breite, und insbesondere sollte die Steuerung dabei einen Entscheidungsalgorithmus umfassen, der automatisch entscheidet, ab welchen Relationen bzw. Absolutwerten das Hindernis umfahren statt überfahren wird, also eine Umfahrung durch Querversatz oder Schrägstellung des Mähkopfes statt eines Überfahrens mittels Anheben des gesamten Mähkopfes zu erfolgen hat.

Die Signale der kontaktlos arbeitenden Sensoren und/oder der Drucksensoren bzw. Kraftsensoren der mechanischen Abtastung hinter dem Mähwerk können auch dafür verwendet werden, die Drehzahl bzw. das Drehmoment der rotierenden Arbeitseinheit zu steuern und/oder die Geschwindigkeit des Arbeitskopfes in Arbeitsrichtung, also insbesondere auch die Geschwindigkeit des Arbeitsfahrzeuges.

Neben den vertikal nach unten abtastenden Sensoren oder auch anstelle dieser Sensoren können der Kippwinkel und/oder die Höhensteuerung des Mähkopfes auch mittels der schräg nach vorn arbeitenden, die Kontur des festen Untergrundes abtastenden, Sensoren gesteuert werden.

Falls am Arbeitsfahrzeug neben dem vorderen Arbeitskopf ein zweiter, hinterer Arbeitskopf ebenfalls vorhanden ist, können die am vorderen Mähkopf vorhandenen Sensoren auch zur Steuerung des hinteren Mähkopfes mitverwendet werden, insbesondere indem beide Mähköpfe von der gleichen Steuerung gesteuert werden und der Steuerung die Relativlage des zweiten Arbeitskopfes relativ zum ersten Arbeitskopf bekannt ist. In diesem Fall ist die Abtastbreite der Sensoren des ersten, vorderen Arbeitskopfes vorzugsweise nicht auf deren Arbeitsbreite beschränkt, sondern erstreckt sich auch auf die Arbeitsbreite des zweiten, in der Regel seitlich versetzt zum ersten Arbeitskopf eingesetzten, zweiten Arbeitskopfes hinein.

Da für die richtige Auswertung der Signale der berührungslos arbeitenden Sensoren deren Position z. B. relativ zum Arbeitsfahrzeug und/oder relativ zum Arbeitskopf bekannt sein muss und berücksichtigt werden muss, werden Positionsveränderungen der Positionen der Sensoren von der Steuerung berücksichtigt. Diese Positionsveränderungen sind bei Befestigung der Sensoren auf dem Gehäuse des Arbeitskopfes alle Veränderungen der Relativlage des Arbeitskopfes zum Untergrund, aber auch Veränderungen relativ zum Trägerfahrzeug.

Um die Relativlage vor allem des Arbeitskopfes relativ zum Trägerfahrzeug zu bestimmen, können einzelne der Sensoren auf eine definierte Bezugsfläche oder einen Bezugspunkt am Arbeitsfahrzeug gerichtet sein, so dass auf die Erfassung der Ist-Stellungen der mechanischen Verbindungselemente zwischen Arbeitskopf und Trägerfahrzeug, beispielsweise der Elemente des Auslegerarmes sowie der diese Elemente zueinander haltenden Hydraulikzylinder, unter Umständen verzichtet werden kann.

Im Idealfall befinden sich möglichst viele der eingesetzten, berührungslos arbeitenden Sensoren befestigt an ein und demselben Element, beispielsweise dem an den Arbeitskopf anschließenden Element des Auslegerarmes, und dessen Position ist relativ zum Arbeitsfahrzeug und/oder relativ zum Untergrund ebenfalls ständig bekannt, einerseits mittels der von den entsprechenden Sensoren abgegebenen Signale (relativ zum Untergrund), als auch mittels eines speziellen Sensors, der die Relativlage zum Arbeitsfahrzeug ständig bestimmt.

Zusätzlich können berührungslos arbeitende Sensoren auch hinter dem Mähwerk angeordnet sein, beispielsweise an der Hinterkante des Gehäuses des Arbeitskopfes oder am Auslegerarm, um dort, beispielsweise wegen des bereits gemähten Grases besser den Untergrund abtasten zu können anstelle oder zusätzlich zu einer mechanischen Abtastung.

Die nahe des seitlichen Endes am Gehäuse des Arbeitskopfes angeordneten, schräg nach unten und vorne gerichteten, Sensoren sind dabei vorzugsweise so ausgerichtet, dass eine Kante ihres kegelförmigen Abtastbereiches mit der in Fahrtrichtung verlaufenden Außenkante des durch den Arbeitskopf zu bearbeitenden Streifens, also des Arbeitsbereiches, übereinstimmt, und die andere Kante des Kegels innerhalb des Arbeitsbereiches liegt.

### c) Ausführungsbeispiele

Ausführungsformen gemäß der Erfindung sind im Folgenden beispielhaft näher beschrieben. Es zeigen:
- Fig. 1:: die Situation eines Mähkopfes in der Seitenansicht,
- Fig. 2:: die Situation des Mähkopfes in der Aufsicht,
- Fig. 3:: den Mähkopf von vorne mit unterschiedlicher Lage einer Bodenerhebung, und
- Fig. 4:: das gesamte Arbeitsgerät in der Aufsicht.

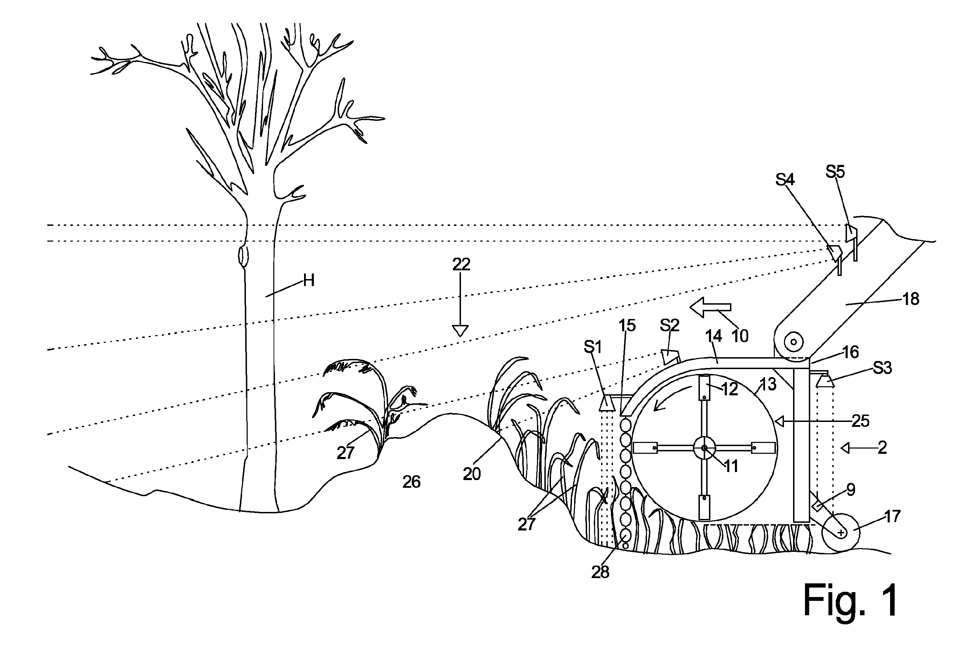

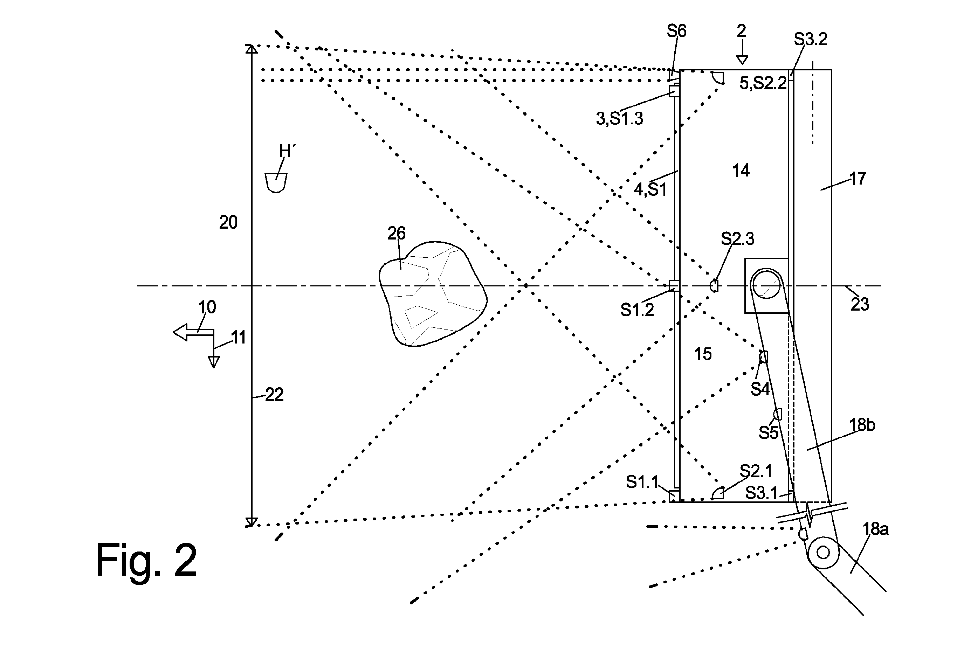

In den Fig. 1 und 2 ist ein Mähkopf 2 in der teilgeschnittenen Seitenansicht bzw. in der Aufsicht im Einsatz dargestellt, der wie üblich am freien Ende eines Auslegerarms 18 gehalten wird, der in der Mitte des in Querrichtung 11 zur Arbeitsrichtung 10 stehenden Gehäuses 14 angreift.

Innerhalb des Gehäuses 14 ist das Mähwerk mit seinem Schneidmittel 12 um eine in Querrichtung verlaufende Rotationsachse innerhalb des Gehäuses 14 gelagert.

Die Rotationsachse liegt nicht immer horizontal, da die Kipplage des gesamten Mähkopfes 2 um eine in Fahrtrichtung verlaufende Kippachse 23 einstellbar ist, vorzugsweise entsprechend der Seitenneigung des Untergrundes 20.

Wie am besten Fig. 1 erkennen lässt, besteht das Ziel darin, den Mähkopf 2 in einen gleich bleibenden Abstand gegenüber dem Untergrund 20 zu führen, so dass der Bewuchs 27 dadurch auf die vorgegebene Soll-Höhe abgemäht wird.

In der Vergangenheit erfolgte dies dadurch, dass am hinteren Ende des Gehäuses 14 ein in Querrichtung 11, meist über die gesamte Breite des Mähkopfes 2 sich erstreckendes, Abtastelement wie etwa die dargestellte Abtastwalze 17 auf dem Untergrund 20 abrollte, wobei die Auflagekraft der Abtastwalze 17 gegen den Untergrund oder die Relativlage der Walze zum Gehäuse 14 detektiert und für die Höhensteuerung des Mähkopfes 2 über dem Untergrund verwendet wurde.

Wie Fig. 1 unmittelbar erkennen lässt, wird dadurch ein relativ steiler Anstieg des Untergrundes 20 zu spät detektiert und die Schneidmittel 20 können sich in den Untergrund 20 eingraben, zumal der an der Vorderkante 15 des Gehäuses 14 herabhängende Schleuderschutz 28 in Form von Ketten oder beweglich aufgehängten Platten dies nicht verhindern kann.

Auch eine Änderung der Bewuchsart z. B. von Gras in festeres, holzigeres Material wird ebenfalls vorab nicht festgestellt, und ebenso wenig wird durch diesen Mechanismus das Vorhandensein massiver Hindernisse H wie etwa des dargestellten Baumes ermöglicht.

Erfindungsgemäß werden dem Mähkopf 2 kontaktlos arbeitende Sensoren zugeordnet, die den Arbeitsbereich 22 in Arbeitsrichtung 10 vor dem Mähkopf 2 berührungslos abtasten:
So zeigt Fig. 1 Sensoren S1, die an der Vorderkante des Gehäuses 14 montiert sind und vor dessen Vorderkante vertikal nach unten gerichtet sind zur Abtastung des Untergrundes.

Wenn es sich dabei um Punktsensoren 3 handelt, sind die Sensoren S1 wenigstens nahe des linken sowie rechten Randes des Gehäuses 14 befestigt, und vorzugsweise zusätzlich wenigstens einmal im mittleren Bereich (S1.1 bis S1.3) wie in Fig. 2 eingezeichnet, oder es ist stattdessen ein Liniensensor 4 in Querrichtung 11 durchgehend vor der Vorderkante 15 des Gehäuses 4 montiert.

Diese Sensoren dienen vorzugsweise der Abtastung der momentanen Ist-Höhe gegenüber dem Untergrund 20 unmittelbar vor dem Wirkbereich des Mähwerks 13.

Wie in Fig. 1 zu erkennen, ist ebenfalls am Gehäuse 14, aber an einem höheren Punkt liegend und damit meist auch etwas weiter hinten auf der Oberseite des Gehäuses, wenigstens ein Sensor S2 angeordnet, der schräg nach vorne unten gerichtet ist und in der Seitenansicht einen spitzen Kegel mit einem Kegelwinkel von weniger als 30°, insbesondere weniger als 15° beschreibt und primär dem Detektieren der weiter vorn liegenden Kontur des Untergrundes und/oder der Art und Struktur des Bewuchses dient.

Wie Fig. 2 zeigt, sind auch hiervon vorzugsweise über die Breite des Mähkopfes verteilt wenigstens zwei solcher Sensoren S2.1 und S2.2 an den seitlichen Außenbereichen des Mähkopfes 2 befestigt, gegebenenfalls ein zusätzlicher im mittleren Bereich.

In der Aufsicht betrachtet sind die Öffnungswinkel in deren Strahlbereichen wesentlich größer als in der Seitenansicht betrachtet, nämlich mit einem Winkel von > 30°, vorzugsweise etwa 40 bis 60°, wobei in der Aufsicht betrachtet eine der Kanten des Strahlungskegels in etwa mit der Außenkante des vom Mähkopf zu mähenden Mähstreifens übereinstimmt, die andere Kante schräg in diesen Arbeitsbereich 21 hinein verläuft, so dass die gesamte Breite des Arbeitsbereiches 22 mittels der einander überlappenden Wirkbereiche der zwei oder auch mehr dieser Flächensensoren 5, die jeweils die Wirkfläche einer flachen Ellipse aufweisen, abdeckt.

Fig. 1 zeigt ferner hinter der Hinterkante des Mähkopfgehäuses 14 einen weiteren vertikal nach unten gerichteten Sensor S3, vorzugsweise wiederum in der Form eines Punktsensors, und vorzugsweise gemäß Fig. 2 wiederum an den beiden Außenenden des Gehäuses montiert, die auch dort die Höhe entweder über dem Untergrund 20 oder über dem gemähten Bewuchs detektieren sollen, entweder anstelle oder ergänzend zu der in den Fig. 1 und 2 eingezeichneten Abtastwalze 17.

Fig. 1 zeigt ferner noch höher liegend als Sensor S2 und deshalb an dem Auslegerarm 18 befestigt nach vorn gerichtete Sensoren S4 und S5, wobei Sensor S5 fast oder ganz horizontal nach vorn gerichtet ist und vor allem hoch aufragende Hindernisse H wie etwa einen Baum oder einen Pfosten weit im voraus detektieren soll und dementsprechend eine große Wirkweite besitzt.

Sensor S4 ist demgegenüber leicht geneigt nach unten vorne gerichtet, also mit einem Neigungswinkel von weniger als 20°, vorzugsweise weniger als 15° gegenüber der Horizontalen.

Beide Sensoren weisen in der Seitenansicht betrachtet einen geringen Öffnungswinkel ihres Wirkkegels auf, der zwischen 0° und 10° liegt, in der Aufsicht gemäß Fig. 2 betrachtet jedoch wesentlich größer ist, nämlich von über 30°, vorzugsweise über 40°, vorzugsweise über 60°, so dass auch diese Sensoren entweder als Flächensensoren 5 eingestuft werden können oder - wenn der in der Seitenansicht betrachtete Öffnungswinkel ihrer Kegel gegen Null tendiert - als Liniensensoren 4 aufgrund eines annähernd linienförmigen Abtastfeldes.

Durch eine derartige Sensorausstattung könnte ein Steuerungsverfahren für die Höhe des Mähkopfes 2 über dem Untergrund 20 sowie die Kipplage des Mähkopfes um die in Arbeitsrichtung 10 verlaufende Kippachse 23 wie folgt aussehen:
Mittels des am weitesten nach vorn abtastenden Sensors S5 wird das Auftauchen eines Hindernisses H weit vorab als erstes detektiert.

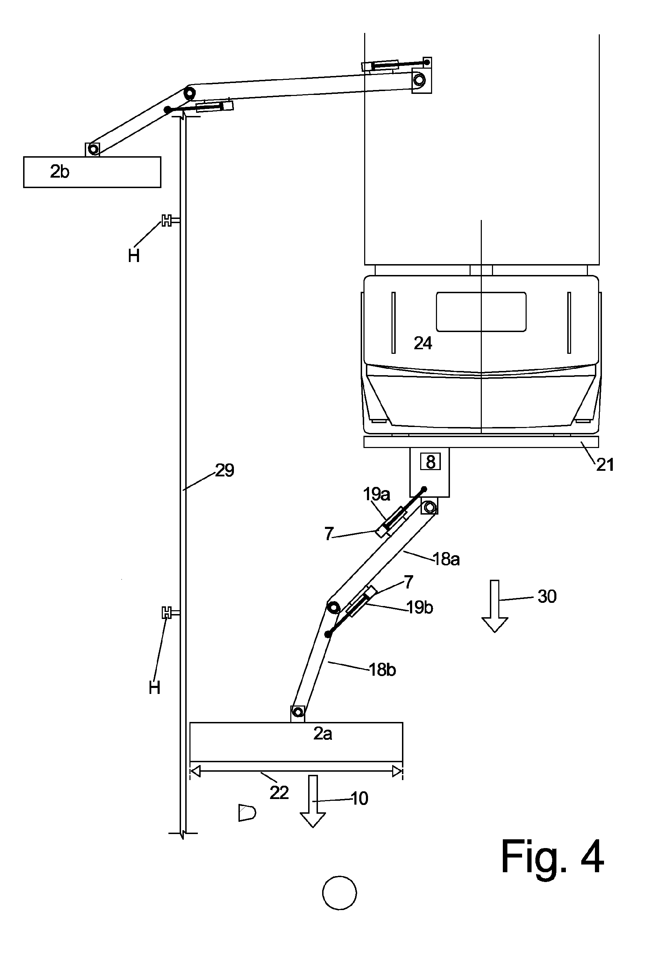

Da das Hindernis bis in die Wirkhöhe des Sensors S5 hineinreicht, entscheidet die auswertende Steuerung 8, dass dieses Hindernis H für eine Überfahrung durch Anheben des Mähkopfes 2 zu hoch ist. Da z.B. Sensor S5 auch die Breite des Hindernisses H erkennen kann, sowie die Position des Hindernisses innerhalb der Breite des Mähstreifens, wird die Steuerung 8 den Mähkopf 2 - gegebenenfalls unter Berücksichtigung der Annäherungsgeschwindigkeit an das Hindernis H - durch Querversatz oder durch Verschwenken des Mähkopfes um seine vertikale Mittelachse am Auslegearm möglichst knapp am Hindernis H bzw. H' auf der Innenseite, also der dem Trägerfahrzeug 24 zugewandten, Seite vorbeiführen, wie die Darstellung des gesamten Trägerfahrzeuges der Fig. 4 klarmacht. Aufgrund der Höhe des Hindernisses H ist ein Herumführen auf der Außenseite nicht sinnvoll, da dann der Auslegerarm 18 an den oberen Teilen des Hindernisses H hängen bleiben würde.

Verschwindet Hindernis H bei Näherkommen des Mähkopfes 2 aus dem fast waagrecht nach vorn gerichteten Detektionsfeld des Sensors S5, so ist es niedriger als die Abtasthöhe von S5, und kann auch auf der Außenseite umfahren werden bei entsprechender Stellung des Auslegerarmes 18.

Sensor S4 tastet ebenfalls weit voraus, aber weniger weit als S5, vorzugsweise die Bodenkontur ab und bemerkt das Herannahen der Erhebung 26 und zumindest dessen Höhe, gegebenenfalls auch dessen Querposition, und veranlasst bei Annäherung an die Erhebung 26 beispielsweise eine Reduzierung der Geschwindigkeit des Mähkopfes 2 in Fahrtrichtung 10.

Gleiches gilt, falls Sensor S4, gegebenenfalls auch der hierfür vorgesehene Sensor S2, eine Veränderung der Struktur des Bewuchses erkennt, die eine erhöhte Mähleistung erfordert. Auch dann wird die Fahrgeschwindigkeit in Fahrtrichtung 10 reduziert und/oder die Drehzahl des Mähwerks 13 erhöht, um dennoch ein befriedigendes Mähergebnis zu erreichen.

Wenn die Erhebung 26 in den Detektionsbereich der am steilsten nach unten weisenden, insbesondere der vertikal nach unten weisenden Sensoren, z. B. S1, gerät, ist die Geschwindigkeit bereits so weit abgesenkt, dass die Reaktionszeit der Steuerung ausreicht, um der Erhebung 26 auszuweichen.

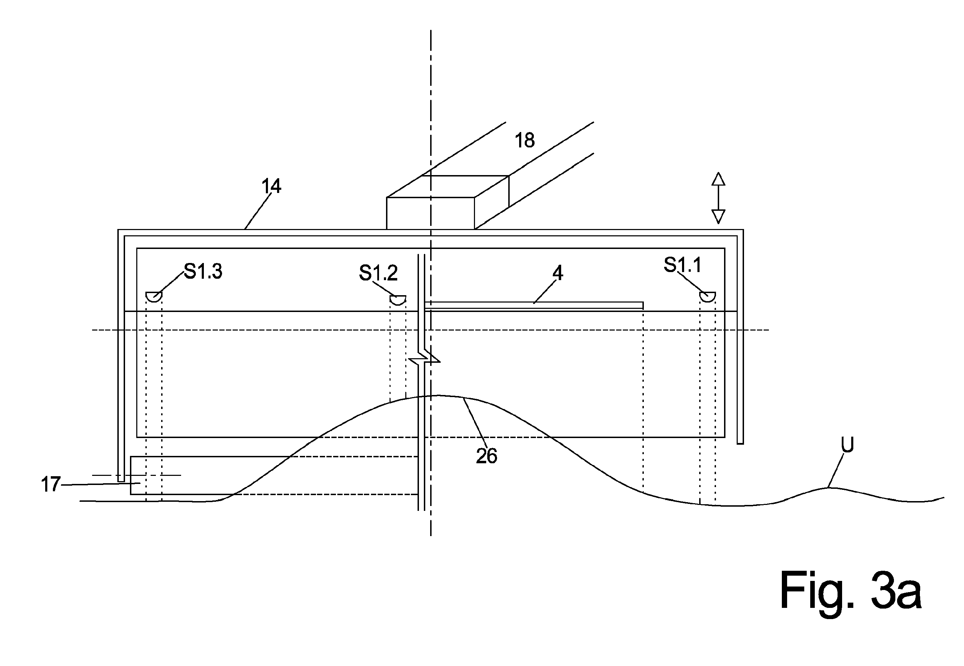

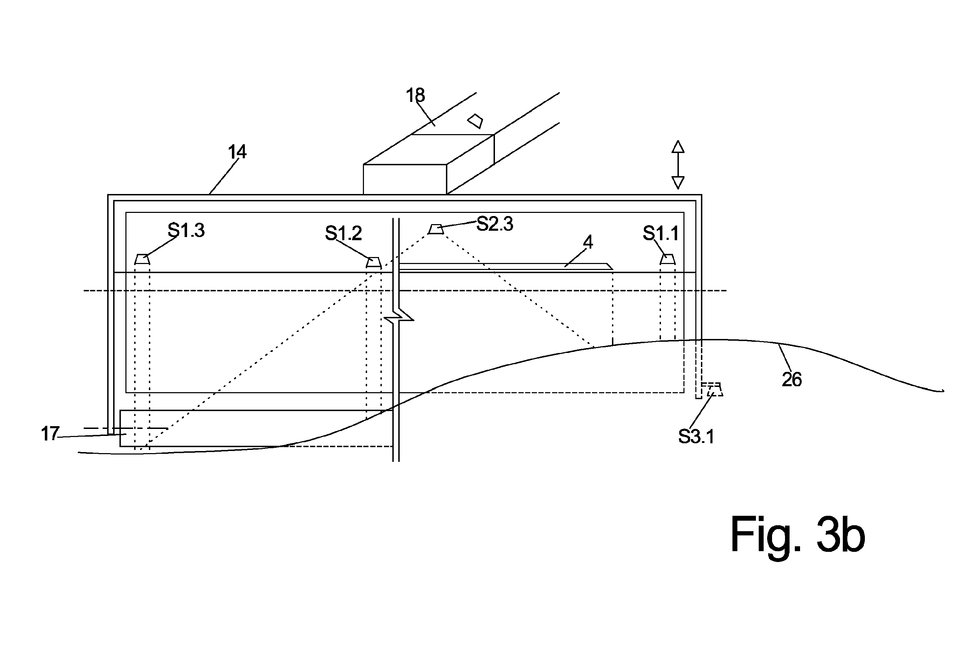

Wie die Fig. 3a und b zeigen, kann sich die Erhebung 26 etwa im mittleren Bereich der Breite des Mähkopfes 2 befinden, wie in Fig. 3a dargestellt, oder eher an einer der Außenseiten, wie in Fig. 3b dargestellt.

Im ersteren Fall erkennen die beiden außen in den Randbereichen befestigten Sensoren S1.1 und S1.3 die herangenahte Erhebung 26 möglicherweise nicht, wenn deren Abmessungen in der Breite zu gering sind.

Sofern jedoch wenigstens ein zusätzlicher Sensor S1.2 im mittleren Bereich vorhanden ist oder stattdessen über die Breite durchgehend ein Liniensensor 4 montiert ist, wird das Erreichen der Erhebung 26 durch den Mähkopf 2 erkannt durch schnelle Verringerung der detektierten Ist-Höhe über dem Untergrund durch den entsprechenden Sensor S1, und der Mähkopf 2 wird insgesamt entsprechend angehoben, um die eingestellte Soll-Höhe über dem Untergrund, also die Mähhöhe, einzuhalten.

Im Beispiel der Fig. 3 wird eine solche Verringerung schwerpunktmäßig nur auf der einen Seite des Mähkopfes im Bereich der Erhebung 26 detektiert, am anderen Endbereich nicht, worauf die Steuerung durch Kippen des Mähkopfes 2 um die Kippachse 23, also Anheben des Mähkopfes nur auf einer Seite bis zum Erreichen der Soll-Mähhöhe, reagiert.

Damit nach Überlaufen der Erhebung 26 das Absenken des Mähkopfes bzw. Geradestellen nicht zu früh erfolgt aufgrund der entsprechenden Signale von der Vorderkante 15 des Gehäuses dienen die Signale von der Hinterkante 16, also der Sensoren S3 bzw. der Abtastwalze 17.

Fig. 4 zeigt in der Aufsicht betrachtet ein Arbeitsfahrzeug 24, an dessen Versatzschiene 21, die in Querrichtung 11 verlaufend vor der Front des Arbeitsfahrzeuges 24 montiert ist, der Befestigungskopf für den Auslegerarm 18 mit seinen wenigstens zwei zueinander beweglichen Elementen 18a und 18b vorhanden ist, der vorzugsweise auch in Querrichtung entlang der Versatzschiene 21 verfahrbar ist. Der am vorderen freien Ende des Auslegerarmes 18 befestigte Mähkopf 2a wird dabei mittels der Sensoren S1, S2... entlang der Innenseite einer Leitplanke 29 entlanggeführt, während vorzugsweise auf dem Heck des Arbeitsfahrzeuges 24 ein zweiter Auslegerarm mit einem zweiten Mähkopf 2b angeordnet ist, der auf der Außenseite der Leitplanke und deren auf der Rückseite nach außen versetzten vertikalen Tragpfosten H entlanggeführt wird.

Der zweite Mähkopf 2b kann mit einer analogen Sensorik ausgestattet sein, oder die Sensoren am vorderen, ersten Mähkopf 2a werden - wenigstens teilweise - auch zur Steuerung des weiter hinten laufenden zweiten Mähkopfes 2b verwendet, die dann allerdings auch den Breiten-Bereich des zweiten Mähkopfes 2b mit abdecken müssen, und wobei die Steuerung 8 beide Mähköpfe 2a, b gemeinsam steuert.

Um die Relativlage eines der Mähköpfe 2a, b zum Trägerfahrzeug 24 zu detektieren, kann ein Referenz-Sensor am Mähkopf 2a und/oder am Arbeitsfahrzeug 24 angeordnet sein, der eine Referenzfläche oder einen Referenzpunkt am jeweils anderen genannten Teil abtastet und dadurch die Relativlage der beiden zueinander detektiert.

Stattdessen kann die Relativlage auch ermittelt werden, indem in allen zwischen Arbeitsfahrzeug 24 und Mähkopf 2a vorhandenen Stellelementen, in der Regel Hydraulikzylindern, 19a, b, Stellungsgeber 7 eingebaut sind und durch Detektion all dieser Stellungen in Summe die Relativlage des entsprechenden Mähkopfes z. B. 2a gegenüber dem Arbeitsfahrzeug 24 ständig ermittelt werden.

### BEZUGSZEICHENLISTE

- 1: Arbeitsgerät
- 2: Mähkopf
- 3: Punktsensor
- 4: Liniensensor
- 5: Flächensensor
- 6: Scannerleiste
- 7: Stellungsgeber
- 8: Steuerung
- 9: Kraftsensor
- 10: Arbeitsrichtung
- 11: Querrichtung
- 12: Schneidmittel
- 13: Flugkreis
- 14: Gehäuse
- 15: Vorderkante
- 16: Hinterkante
- **17**: **Abtastwalze**
- 18: Auslegerarm
- 19: Hydraulikzylinder
- 20: Untergrund
- 21: Versatzschiene
- 22: Arbeitsbereich
- 23: Kippachse
- 24: Arbeitsfahrzeug
- 25: Mähwerk
- 26: Erhebung
- 27: Bewuchs
- 28: Schleuderschutz
- 29: Leitplanke
- 30: Fahrtrichtung
- H: Hindernis
- S1, S2...: Sensoren

## Patentansprüche

1. Verfahren zur Steuerung, insbesondere Höhensteuerung, eines über dem Untergrund bewegten Arbeitskopfes, insbesondere Mähkopfes (2), insbesondere relativ zum Untergrund (20),
**dadurch gekennzeichnet, dass**
- mittels wenigstens einem berührungslos arbeitendem Sensor der Untergrund (20) in Arbeitsrichtung (10) vor und/oder seitlich von dem momentanen Wirkbereich des Arbeitskopfes, insbesondere Mähkopfes (2), abgetastet wird, und
- die von dem berührungslosen Sensor ermittelten Signale der Steuerung (8) zugeführt werden, und diese die Lage, insbesondere Höhenlage und/oder Kipplage um eine horizontale, in Arbeitsrichtung (10) liegende Kippachse, verändert.

2. Verfahren zur Steuerung, nach Anspruch 1,
**dadurch gekennzeichnet, dass**
- die Veränderung der Höhenlage und/oder Kipplage unter Berücksichtigung der momentanen Geschwindigkeit des Mähkopfes (2) in Arbeitsrichtung (10) erfolgt, die der Steuerung (8) in Form eines Fahrt-Geschwindigkeits-Signals, insbesondere des Arbeitsfahrzeuges (24), welches den Mähkopf (2) trägt, zugeführt wird, und/oder insbesondere
- die Änderung der Höhenlage und/oder Kipplage unter Berücksichtigung einer zuvor eingegebenen Soll-Arbeitshöhe über dem Untergrund (2) erfolgt, und/oder insbesondere
- die Abtastung vor der Vorderkante (15) des Gehäuses (14) des Mähkopfes (2) erfolgt.

3. Verfahren nach einem der vorhergehenden Ansprüche,
**dadurch gekennzeichnet, dass**
- die Abtastung vertikal nach unten und/oder insbesondere mittels punktförmig abtastender Sensoren wenigstens an den äußeren Rändern des Mähkopfes (2), insbesondere auch in dessen mittlerem Bereich, insbesondere in Querrichtung durchgehend in Form eines Liniensensors (4), erfolgt, und/oder insbesondere
- wenigstens an einer Seite des Mähkopfes eine Führungslinien-Abtastung der vorhergehenden Mähkante und/oder des Straßenrandes erfolgt, und/oder insbesondere
- in Fahrtrichtung hinter dem Mähwerk (25) am Gehäuse (14) ein vorzugsweise in Querrichtung durchgehendes Abtastmittel, insbesondere eine Abtastwalze (17), den Untergrund (20) abtastet und insbesondere ein Kraftsensor (9) vorhanden ist zur Messung des Auflagedruckes, dessen Signal ebenfalls der Steuerung (8) zugeführt wird.

4. Verfahren nach einem der vorhergehenden Ansprüche,
**dadurch gekennzeichnet, dass**
- in Arbeitsrichtung (10) vor der Höhenabtastung ebenfalls mittels wenigstens eines berührungslos arbeitenden Sensors eine Konturabtastung des Untergrundes und/oder eine Abtastung des Bewuchses, insbesondere hinsichtlich dessen Höhe und/oder dessen Struktur, durchgeführt wird, dessen Signale ebenfalls der Steuerung (8) zugeführt werden, und/oder insbesondere
- die Bewuchsabtastung mittels eines Liniensensors (4) oder eines Flächensensors (5) erfolgt, und/oder insbesondere
- die Bewuchsabtastung von einem Punkt oberhalb des Befestigungspunktes der vertikalen Höhenabtastung und mit Blickrichtung nach schräg vorne erfolgt.

5. Verfahren nach einem der vorhergehenden Ansprüche,
**dadurch gekennzeichnet, dass**
- zur Bewuchsabtastung Sensoren verwendet werden, deren Signale geeignet sind, die Struktur des Bewuchses nicht nur hinsichtlich Breite und Abstände der Bewuchselemente, sondern auch hinsichtlich deren Struktur, insbesondere Dicke und/oder Masse der Bewuchselemente, zu unterscheiden, und/oder insbesondere
- die berührungslos arbeitenden Sensoren mittels Ultraschall im Bereich von 20 bis 1000 kHz, insbesondere 40 bis 400 kHz, insbesondere 180 bis 200 kHz, Mikrowellen im Bereich von 20 bis 30 GHz, insbesondere 24 bis 25 GHz, Laser im Bereich von 50 bis 200 GHz oder Infrarot im Bereich von 50 bis 150 GHz betrieben werden, und/oder insbesondere
- als Sensoren Lasersensoren, auch im 2D-Modus oder 3D-Modus arbeitende Lasersensoren, verwendet werden.

6. Verfahren nach einem der vorhergehenden Ansprüche,
**dadurch gekennzeichnet, dass**
- die Sensoren mittels Radar im Bereich von 24 GHz verwendet werden, und/oder insbesondere
- als Sensoren CCD-Sensoren verwendet werden und mit den Signalen dieser CCD-Sensoren eine Bildverarbeitung durchgeführt wird, und/oder insbesondere
- als punktuell arbeitende Sensoren primär Laser verwendet werden.

7. Verfahren nach einem der vorhergehenden Ansprüche,
**dadurch gekennzeichnet, dass**
- als linienförmig oder flächig arbeitende Sensoren vorzugsweise Ultraschallsensoren verwendet werden, und/oder insbesondere
- die Strahlungsleistung der Sensoren während des Betriebes verändert wird in Abhängigkeit des zuvor ermittelten Abstandes gegenüber dem Untergrund (20) und/oder Höhe bzw. Struktur des Bewuchses, und/oder insbesondere
- Sensoren verwendet werden, die die Relation von Höhe zu Grundfläche, zumindest Breite in einer Blickrichtung, eines Hindernisses mit erfassen und die Steuerung einen Entscheidungsalgorithmus umfasst, ab welchen Relationen und/oder Absoluthöhen das Hindernis umfahren statt überfahren wird, insbesondere ob die Umfahrung durch Querversatz des Mähkopfes oder Schrägstellung des Mähkopfes erfolgen soll.

8. Verfahren nach einem der vorhergehenden Ansprüche,
**dadurch gekennzeichnet, dass**
- basierend auf den Signalen der kontaktlos arbeitenden Sensoren und/oder der Kraftsensoren die Drehzahl und/oder das Drehmoment der Mähvorrichtung und/oder die Geschwindigkeit des Mähkopfes in Arbeitsrichtung und/oder die Geschwindigkeit des Trägerfahrzeuges verändert wird, und/oder insbesondere
- aus der Relation der von den Kontursensoren ermittelten Signale der Kippwinkel und/oder die Höhe des Mähkopfes bestimmt wird, und/oder insbesondere
- aus der Relation der Signale in Fahrtrichtung vor dem Mähwerk und denen hinter dem Mähwerk die Höhenlage und/oder der Kippwinkel des Mähkopfes (2a) bestimmt werden.

9. Verfahren nach einem der vorhergehenden Ansprüche,
**dadurch gekennzeichnet, dass**
- bei Vorhandensein eines vorderen Mähkopfes und eines hinteren Mähkopfes die von den Sensoren am vorderen Mähkopf ermittelten Signale auch der Steuerung für den hinteren Mähkopf zur Verfügung gestellt und für dessen Betrieb berücksichtigt werden, und insbesondere beide Mähköpfe von der gleichen Steuerung gesteuert werden, und/oder insbesondere
- berührungslos abtastende Sensoren oberhalb des Mähkopfes (2), insbesondere am Auslegerarm, angeordnet sind und bei der Auswertung von deren Signalen die mit der Stellung des Auslegerarmes sich ändernde Relativlage dieser Sensoren relativ zum Mähkopf und/oder relativ zum Arbeitsfahrzeug berücksichtigt wird, und/oder insbesondere
- die Berücksichtigung durch Ermittlung der Relativstellung aller zueinander bzw. zum Arbeitsfahrzeug (7) beweglichen Elemente erfolgt, insbesondere des ersten Teils (18a) des Auslegerarmes (18) zum Arbeitsfahrzeug, insbesondere dessen Versatzschiene (21) und der Relativlage der zweiten Teils (18b) des Auslegerarmes (18) zum ersten Teil und/oder des Mähkopfes (2a) zum zweiten Teil (18b) des Auslegerarmes (18), und/oder insbesondere
- die Relativlage ermittelt wird durch Detektion der Stellung der die Relativlage dieser Elemente zueinander bewirkenden Hydraulikzylinder (19a,b...).

10. Mähkopf (2), insbesondere geführt am freien Ende eines Auslegerarmes (18) mit einer Abtastvorrichtung für den Untergrund,
**dadurch gekennzeichnet, dass**
die Abtastvorrichtung wenigstens einen berührungslos arbeitenden Sensor (3 - 6) wenigstens im vorderen Bereich des Mähkopfes (2) umfasst.

11. Mähkopf nach Anspruch 10,
**dadurch gekennzeichnet, dass**
- die Abtastvorrichtung eine Abtastwalze (17) in Arbeitsrichtung (10) hinter dem Mähwerk (25) des Mähkopfes (2) umfasst, die quer zur Arbeitsrichtung (10) über die Breite des Mähkopfes verläuft und insbesondere relativ zum Gehäuse (14) des Mähkopfes (2) gefedert und/oder mit einem Kraftsensor (9) verbunden ist, und/oder insbesondere
- berührungslos arbeitende Sensoren auch im hinteren Bereich am Mähkopf (2), insbesondere an dessen Gehäuse (14), angeordnet sind, und/oder insbesondere
- an wenigstens einem Seitenbereich des Mähkopfes (2), insbesondere dessen Gehäuse (14), ein Führungskantensensor vorhanden ist.

12. Mähkopf nach einem der vorhergehenden Vorrichtungsansprüche,
**dadurch gekennzeichnet, dass**
- in Arbeitsrichtung (10) vor dem Mähwerk (25) am Mähkopf (2) vorzugsweise vertikal nach unten gerichtete Untergrund-Sensoren, insbesondere in Form von einzelnen entlang der Breite angeordneten Punktsensoren (3) oder in Form einer Scannerleiste (6), angeordnet sind, und/oder insbesondere
- oberhalb der vertikal nach unten gerichteten Untergrundsensoren und insbesondere weiter hinten am Mähkopf (2) schräg nach vorne unten gerichtet wenigstens ein weiterer Untergrundsensor, insbesondere in Form eines Liniensensors, und/oder wenigstens ein Bewuchssensor angeordnet ist, und/oder insbesondere
- der weitere Untergrundsensor und/oder Bewuchssensor an jeweils einer Außenseite des Mähkopfes angeordnet ist mit einem in der Aufsicht gesehenem Betrachtungswinkel, dessen Außenkante etwa mit der Außenkante des Mähkopfes (2) übereinstimmt und dessen Innenkante schräg nach vorne zur Arbeitsrichtung gerichtet ist.

13. Mähkopf nach einem der vorhergehenden Vorrichtungsansprüche,
**dadurch gekennzeichnet, dass**
- ein weiterer Bewuchssensor am Auslegerarm oberhalb des Gehäuses (14) des Mähkopfes (2) angeordnet ist, und/oder insbesondere
- an dem kontaktierenden Tastelement, insbesondere einer hinter dem Mähwerk (25) angeordneten Abtastwalze (17), ein Kraftsensor (9) zugeordnet bzw. angeordnet ist, der den Auflagedruck auf dem Untergrund misst.

14. Mähkopf nach einem der vorhergehenden Vorrichtungsansprüche,
**dadurch gekennzeichnet, dass**
die Steuerung in der Lage ist, abhängig von den ermittelten Daten des Bewuchses hinsichtlich Struktur, Ausdehnung in der Breite und Höhe, einschließlich dabei ermittelter vom Untergrund aufragender Hindernisse wie Steine oder Pfosten, die Höhenlage des Mähkopfes und/oder dem Kippwinkel des Mähkopfes und/oder den Schrägstellungswinkel zur Fahrtrichtung (30) festzulegen einschließlich der Steuerung einer Überfahrung oder Umfahrung von Erhebungen abhängig von der Position der Erhebung und insbesondere einschließlich der Beeinflussung der Fahrgeschwindigkeit des Arbeitsfahrzeuges (24).

15. Mähkopf nach einem der vorhergehenden Vorrichtungsansprüche,
**dadurch gekennzeichnet, dass**
- als vertikal nach unten gerichtete Untergrundsensoren Lasersensoren verwendet werden, und/oder insbesondere
- als vertikal nach unten gerichtete oder schräg nach vorne gerichtete Liniensensoren eine Linie von punktuellen Lasersensoren nebeneinander, insbesondere in Form einer Laserscannerleiste, angeordnet sind, und/oder insbesondere
- als schräg nach vorne gerichtete Bewuchssensoren Liniensensoren oder Flächensensoren, insbesondere in Form von Ultraschallsensoren oder Infrarotsensoren, verwendet werden.
